# EUROPÄISCHE PATENTANMELDUNG

(11) **EP 3 530 480 A1**
(43) Veröffentlichungstag der Anmeldung: **28.08.2019**
(21) Anmeldenummer: 19156823.7
(22) Anmeldetag: 13.02.2019
(51) Int. Cl.: B42D 25/364, B42D 25/36, B42D 25/20, B42D 25/455, B42D 25/46, B42D 25/47, B42D 25/324, B60R 13/10

(54) **SCHILDROHLING FÜR EIN RETROREFLEKTIERENDES KENNZEICHENSCHILD SOWIE VERFAHREN ZU DESSEN HERSTELLUNG**

(30) Priorität: 23.02.2018 DE 102018104106
(71) Anmelder: Erich Utsch AG, 57080 Siegen (DE)
(72) Erfinder: Pfundstein, Bernd, 35630 Ehringshausen (DE)
(74) Vertreter: Patentanwälte Bauer Vorberg Kayser

(57) **Zusammenfassung**

Die Erfindung betrifft einen Schildrohling (10) für ein retroreflektierendes Schild (12) aufweisend:
- eine Schildplatine (14),
- eine retroreflektierende Folie (20), sowie
- mindestens ein optisch detektierbares Sicherheitselement (30), das auf der retroreflektierenden Folie (20) angeordnet ist, wobei
- das Sicherheitselement (30) in einer organischen Matrix (32) dispergierte Flüssigkristalle (34) umfasst.

## Beschreibung

Die vorliegende Erfindung betrifft einen Schildrohling für ein retroreflektierendes Schild sowie ein retroreflektierendes Schild zur Kennzeichnung von Kraft-, Schienen- und/oder Wasserfahrzeugen. Ferner betrifft die vorliegende Erfindung ein Verfahren zur Herstellung eines Schildrohlings für ein retroreflektierendes Schild sowie ein System umfassend den erfindungsgemäßen Schildrohling oder das retroreflektierende Schild und eine Prüfvorrichtung.

Aus dem Stand der Technik sind retroreflektierende Schilder, insbesondere Kfz-Kennzeichenschilder, mit optisch wahrnehmbaren Sicherheitsmerkmalen zur Verbesserung der Fälschungssicherheit seit längerem bekannt. Aufgrund eines fehlenden oder gefälschten optischen Sicherheitsmerkmals ist ein derartiges Kfz-Kennzeichenschild leicht zu identifizieren.

Eine Schwierigkeit bei optisch wahrnehmbaren Sicherheitsmerkmalen im Bereich von Schildern zur Kennzeichnung von Fahrzeugen liegt darin, sie vor Manipulation durch den direkten Zugriff zu schützen.

Unter Manipulation ist in diesem Zusammenhang einerseits die mutwillige Beschädigung oder die Zerstörung eines Sicherheitsmerkmals zu verstehen. Andererseits kann eine Manipulation auch darin bestehen, ein Sicherheitsmerkmal zu entfernen oder ein gefälschtes Sicherheitsmerkmal nachträglich anzubringen.

Aufgabe der vorliegenden Erfindung ist es daher, einen gegenüber dem Stand der Technik verbesserten Schildrohling bereitzustellen, insbesondere einen Schildrohling bereitzustellen, bei welchem die Gefahr einer Manipulation eines Schildrohlings oder eines hieraus hergestellten Schilds zur Kennzeichnung von Fahrzeugen reduziert wird. Weiterhin ist Aufgabe der vorliegenden Erfindung ein Herstellungsverfahren für einen solchen Schildrohling anzugeben.

Diese Aufgabe wird mit einem Schildrohling mit den Merkmalen des Anspruchs 1 sowie einem Verfahren zur Herstellung eines Schildrohlings mit den Merkmalen des Anspruchs 11 gelöst.

Vorteilhafte Ausgestaltungen und Varianten der Erfindung ergeben sich aus den abhängigen Ansprüchen und der nachfolgenden Beschreibung. So können die in den Ansprüchen einzeln aufgeführten Merkmale in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Der erfindungsgemäße Schildrohling weist eine Schildplatine, eine retroreflektierende Folie sowie mindestens ein optisch detektierbares Sicherheitselement auf, das auf der retroreflektierenden Folie angeordnet ist.

Das Sicherheitselement umfasst dabei erfindungsgemäß in einer organischen Matrix dispergierte Flüssigkristalle und weist ein anisotrop optisches Verhalten auf.

Die Flüssigkristalle werden dabei vorzugsweise aus sogenannten reaktiven Mesogenen gebildet. Reaktive Mesogene sind polymerisierbare Flüssigkristalle, die aus einem mesogenen Kern und einem oder mehreren polymerisierbaren reaktiven Endgruppen bestehen. Als reaktive Endgruppen werden bevorzugt Acryl-Gruppen verwendet. In Anwesenheit eines Photoinitiators und UV-Licht werden die reaktiven Mesogene miteinander polymerisiert und bilden dabei eine vernetzte Struktur aus, die ein anistrop optisches Verhalten aufweist.

Im Kontext dieser Erfindung bedeutet "optisch detektierbar", dass das Sicherheitselement nur mit optischen Hilfsmitteln, insbesondere einem Polarisationsfilter wahrnehmbar ist. Für das menschliche Auge ist das Sicherheitselement demnach nicht identifizierbar.

Dadurch, dass das Sicherheitselement für das menschliche Auge ohne Zuhilfenahme eines optischen Hilfsmittels nicht identifizierbar ist, wird eine Manipulation des Schildrohlings oder eines hieraus hergestellten Schilds zur Kennzeichnung von Fahrzeugen erschwert.

In einer besonders bevorzugten Ausführungsvariante sind die Flüssigkristalle in einer nematischen Phase angeordnet. In der nematischen Phase weisen die Flüssigkristalle zwei unterschiedlichen Brechungsindizes auf, was als optische Anisotropie grundsätzlich bekannt ist.

Durch Zuhilfenahme eines optischen Hilfsmittels, insbesondere eines Polarisationsfilters, welcher an das Sicherheitselement unmittelbar angelegt wird, wird dieses für das menschliche Auge sichtbar bzw. wahrnehmbar.

Somit kann die Echtheit eines mit dem Sicherheitselement versehenen Schildrohlings oder eines hieraus hergestellten Schilds zur Kennzeichnung von Fahrzeugen, beispielsweise bei einer Verkehrskontrolle, leicht überprüft werden.

Ein Sicherheitselement, bei dem die Flüssigkristalle in der nematischen Phase vorliegen ist in der Nahdistanz identifizierbar.

Zur Sichtbarmachung können sowohl lineare als auch zirkulare Polarisationsfilter verwendet werden.

Ein zirkularer Polarisationsfilter reduziert den Lichtanteil, der von einer reflektierenden Oberfläche, beispielsweise einer retroreflektierenden Folie, reflektiert wird. Ein auf einer retroreflektierenden Folie angeordnetes Sicherheitselement, bei dem die in der organischen Matrix dispergierten Flüssigkristalle in der nematischen Phase vorliegen, erscheint demnach bei Anlegen eines zirkularen Polarisationsfilters heller als der Hintergrund.

Ein linearer Polarisationsfilter hingegen verdunkelt nicht den Hintergrund, sondern hebt das Sicherheitselement farblich hervor. Voraussetzung ist hierbei das Einhalten eines korrekten Winkels des Polarisationsfilters zum Sicherheitselement. Dies kann beispielsweise dadurch erzielt werden, dass der Polarisationsfilter gedreht wird.

Gemäß einem vorteilhaften Aspekt betrifft die vorliegende Erfindung ein System enthaltend einen erfindungsgemäßen Schildrohling mit einem Sicherheitselement bei welchem die in der organischen Matrix dispergierten Flüssigkristalle in der nematischen Phase vorliegen oder ein retroreflektierendes Schild zur Kennzeichnung von Fahrzeugen sowie eine Prüfvorrichtung enthaltend einen linearen und/oder zirkularen Polarisationsfilter. Vorzugsweise ist das retroreflektierende Schild ein aus dem Schildrohling geprägtes Schild enthaltend eine Kennzeichenlegende.

Die Prüfvorrichtung besteht vorzugsweise aus einer linearen und/oder zirkularen Polarisationsfilteranordnung wie sie dem Fachmann aus dem Stand der Technik bekannt ist, die in einer handlichen Fassung eingefasst ist.

In einer anderen bevorzugten Ausführungsvariante sind die Flüssigkristalle in einer cholesterischen Phase angeordnet. Im Gegensatz zu in der nematischen Phase angeordneten Flüssigkristallen, weist ein solches Sicherheitselement den Vorteil auf, dass der Polarisationsfilter nicht unmittelbar an dem Sicherheitselement platziert werden muss, um es identifizierbar zu machen.

Als besonders vorteilhaft hat es sich erwiesen, wenn das Sicherheitselement, welches die in der cholesterischen Phase vorliegenden Flüssigkristalle umfasst, auf einer dunklen retroreflektierenden Folie angeordnet ist. Vorzugsweise ist eine dunkle retroreflektierende Folie eine ausgewählt aus der Gruppe umfassend die Farben Schwarz, Rubinrot, Grün, Blau und Rot. Entsprechende retroreflektierende Folien sind beispielsweise von der Firma 3M aus der Serie 580E bekannt.

Ein Sicherheitselement, bei dem die Flüssigkristalle in der cholesterischen Phase vorliegen ist sowohl in der Nahdistanz als auch in der Ferndistanz identifizierbar. Derartige Schilder können somit voll automatisiert mittels elektronischer Überwachungssysteme, die beispielsweise in eine Straßen-und/oder Autobahninfrastruktur integriert sind, auf Echtheit überprüft werden.

Gemäß einem weiteren vorteilhaften Aspekt betrifft die vorliegende Erfindung zudem ein System enthaltend einen erfindungsgemäßen Schildrohling mit einem Sicherheitselement bei welchem die in der organischen Matrix dispergierten Flüssigkristalle in der cholesterischen Phase vorliegen oder ein hieraus geprägtes retroreflektives Schild zur Kennzeichnung von Fahrzeugen sowie mindestens eine Prüfvorrichtung enthaltend einen zirkularen Polarisationsfilter.

Vorzugsweise umfasst die Prüfvorrichtung eine Kamera, mehr bevorzugt eine Verkehrsüberwachungskamera enthaltend einen zirkularen Polarisationsfilter, der zuschaltbar ist, so dass eine erste Aufnahme ohne einen Polarisationsfilter und eine zweite Aufnahme mit einem Polarisationsfilter gemacht werden kann. Durch einen Vergleich beider Aufnahmen können die Schilder auf Echtheit geprüft werden.

Weiterhin bevorzugt ist das System an eine Verkehrsleitzentrale angebunden.

Vorzugsweise besteht die organische Matrix aus einem UV-härtenden Klarlack, in dem die Flüssigkristalle dispergiert sind.

In einer weiteren vorteilhaften Ausführungsvariante ist das Sicherheitselement im Schildaufbau eingebettet, so dass das Sicherheitselement nicht der Witterung ausgesetzt ist und somit im Laufe der Verwendung detektierbar bleibt. Vorzugsweise umfasst der Schildrohling hierzu eine auf der retroreflektierenden Folie angeordnete transparente Schutzschicht auf.

Vorzugsweise wird die Schutzschicht aus demselben UV-härtenden Klarlack gebildet. Mehr bevorzugt wird als Schutzschicht eine transparente Kunststofffolie verwendet, die als abschließende Schicht auf den Schildrohling auflaminiert wird.

Vorzugsweise umfasst das Sicherheitselement mindestens ein gedrucktes Objekt, das mehr bevorzugt aus einem Bild, einem Symbol, einem Wappen, einem Hoheitszeichen, einem oder mehrerer Buchstaben, einer oder mehrerer Zahlen, einer geometrischen Struktur, einem Code wie Barcode oder QR-code, oder einer Kombination hiervon besteht.

Der Schildrohling kann entweder nur mit dem hier genannten Sicherheitselement allein versehen oder zusätzlich mit aus dem Stand der Technik bekannten Sicherheitsmerkmalen beliebig kombiniert werden.

Beispielhafte Ausführungen für aus dem Stand der Technik bekannte Sicherheitselemente sind Hologramme, Kinegramme, Farbverläufe, metamere Farbenpaare, Druckelemente mit optisch variabler Farbe, laserbestrahlte Bereiche, mechanisch geprägte Strukturen, gestanzte Strukturen oder beliebige weitere aus dem Stand der Technik bekannte, optisch wahrnehmbare Sicherheitselemente zur Verbesserung der Fälschungssicherheit.

In einer vorteilhaften Ausgestaltung umfasst die Schildplatine des erfindungsgemäßen Schildrohlings einen Träger oder besteht aus einem Material ausgewählt aus der Gruppe umfassend Holz, Kunststoff oder Metall, insbesondere Aluminium. Der Träger ist flächenhaft ausgedehnt und eigensteif und verleiht der Schildplatine damit die erforderliche mechanische Stabilität.

Bevorzugt ist die Schildplatine mechanisch prägbar zur Einbringung einer geprägten Kennzeichenlegende. Besonders bevorzugt ist die Schildplatine mitsamt der auflaminierten retroreflektierenden Folie mechanisch prägbar.

In einer Weiterentwicklung umfasst die Schildplatine neben dem Träger zusätzlich eine farbige Beschichtung auf, die auf der Oberfläche des Trägers angeordnet ist. Die Beschichtung ist somit zwischen der Schildplatine und der retroreflektierenden Folie angeordnet. Die Beschichtung kann insbesondere so eingefärbt sein, dass ein unter Verwendung des Schildrohlings hergestelltes Schild zur Kennzeichnung von Fahrzeugen den geltenden nationalen Zulassungsvorschriften entspricht. Vorteilhaft an einer farbigen Beschichtung ist die resultierende Möglichkeit, in den Herstellungsverfahren zur Herstellung verschiedener Rohlinge für beispielsweise Kfz-Kennzeichenschilder bzw. Kfz-Kennzeichenschilder stets den gleichen Träger für verschiedene Rohlinge bzw. Kfz-Kennzeichenschilder zu verwenden und ihn entsprechend der geltenden nationalen Zulassungsvorschriften farblich zu individualisieren. So könnte beispielsweise für die Herstellung eines Kfz-Kennzeichenschilds für Deutschland und die Herstellung eines Kfz-Kennzeichenschilds für die Niederlande der gleiche Träger verwendet werden, lediglich die farbige Beschichtung müsste entsprechend der geltenden nationalen Zulassungsvorschriften angepasst werden.

In einer bevorzugten Ausführungsform ist die Beschichtung mehrfarbig ausgestaltet, z.B. kann die Beschichtung einen die spätere Legende umgreifenden umlaufenden Rahmen umfassen. Auch Hoheitszeichen oder dekorative Elemente können Teil der Beschichtung sein.

In einer weiteren bevorzugten Ausführungsform ist die Beschichtung laserbeschreibbar ausgebildet.

Als retroreflektierende Folien werden vorzugsweise mikrokugelbasierte Folien oder mehr bevorzugt mikroprismatische Folien verwendet.

Mikrokugelbasierte retroreflektierende Folien bestehen im Wesentlichen aus einer in der Ebene der Folie flächenhaft ausgedehnten Reflektorschicht und einer darauf angeordneten oder von dieser beabstandeten Schicht von mikroskopisch kleinen kugelförmigen Linsenelementen hoher optischer Qualität, die in einer transparenten Kunststoffschicht eingelassen sind.

Mikroprimatische retroreflektierende Folien bestehen dagegen aus im Wesentlichen im Folienaufbau mikroprismatischen Elementen und sind, aufgrund der fehlenden Reflektorschicht, transluzent.

Sowohl die mikroglaskugel-basierten als auch die mikroprismatischen Folien weisen die Eigenschaft auf auftreffendes, gerichtetes Licht zurück zur ihrer Lichtquelle zu reflektieren, wodurch eine sehr hohe Sichtbarkeit bei Tag und Nacht erzeugt wird.

Geeignete retroreflektierende Folien sind vielfach kommerziell verfügbar und werden beispielsweise von den Herstellern Avery, 3M sowie Orafol angeboten.

In einer bevorzugten Ausführungsform ist die retroreflektierende Folie farbig ausgebildet. Insbesondere kann die retroreflektierende Folie nur bereichsweise farbig ausgebildet sein, z.B. mit einem die spätere Legende umgreifenden umlaufenden Rahmen oder mit einem farbig hervorgehobenen Bereich, in dem ein Nationalitätenkennzeichen oder/und Siegel einer Zulassungsstelle angeordnet sind/werden. Auch Hoheitszeichen oder dekorative Elemente können bereits ausgebildet sein. Auch kann die retroreflektierende Folie mehrfarbig ausgebildet sein.

In einer bevorzugten Ausführungsform ist das erfindungsgemäße Schild mit einer Kennzeichenlegende versehen. Vorteilhafterweise wird die Legende durch lokale farbige Beschichtung der retroreflektierenden Folie ausgebildet. Insbesondere kann eine Kennzeichenlegende durch mechanisches Prägen des Schildrohlings aus Schildplatine und retroreflektierender Folie und nachfolgendes Einfärben der erhaben geprägten Bereiche des Schildrohlings z.B. mittels Farbübertrag von einer Thermotransferfolie ausgebildet werden.

Gemäß einem weiteren Aspekt betrifft die vorliegende Erfindung ein retroreflektierendes Kennzeichenschild, insbesondere für ein Kraftfahrzeug umfassend den erfindungsgemäßen Schildrohling sowie eine an dem Schildrohling angeordnete individuelle Legende.

Weiterhin betrifft die vorliegende Erfindung ein Verfahren zur Herstellung eines Schildrohlings für ein retroreflektierendes Schild.

In seiner einfachsten Ausprägung umfasst das erfindungsgemäße Verfahren zunächst den Verfahrensschritt des Bereitstellens einer Schildplatine z.B. aus Holz, Kunststoff oder Metall, insbesondere Aluminium, und des Bereitstellens einer retroreflektierenden Folie.

Anschließend wird die retroreflektierende Folie in an sich bekannter Weise auf die Schildplatine auflaminiert, so dass ein Verbund aus Schildplatine und der retroreflektierenden Folie erhalten wird.

Sodann wird mindestens ein optisch detektierbares Sicherheitselement an der retroreflektierenden Folie angeordnet, wobei das Sicherheitselement in einer organischen Matrix dispergierte Flüssigkristalle umfasst.

In einer bevorzugten Ausführungsvariante wird das Sicherheitselement mittels eines Druckverfahrens, besonders bevorzugt mittels eines Siebdruckverfahrens, auf die retroreflektierende Folie aufgebracht.

Weitere dem Fachmann bekannte Druckverfahren oder Beschichtungsverfahren, wie beispielsweise der Rolle-zu-Rolle-Prozess oder der Flexodruck sind ebenfalls geeignet, um das Sicherheitselement auf den mit der retroreflektierenden Folie versehenen Schildrohling aufzubringen.

Alternativ kann zunächst mindestens ein optisch detektierbares Sicherheitselement an der retroreflektierenden Folie angeordnet und die sodann mit dem Sicherheitselement versehene retroreflektierende Folie auf die Schildplatine auflaminiert werden.

Vorzugsweise weist die Schichtdicke des aufgetragenen Sicherheitselements 1 bis 10 µm, mehr bevorzugt 2 bis 5 µm auf.

Das Flächengewicht der Dispersion beträgt vorzugsweise mindestens 1 bis 3 g/m².

In einer weiteren bevorzugten Ausführungsvariante umfasst das erfindungsgemäße Verfahren weiterhin den Schritt des Bereitstellens und Anordnens einer Schutzschicht auf die retroreflektierende Folie, so dass ein Schildrohling erhalten wird, in dem das Sicherheitselement zwischen retroreflektierender Folie und der Schutzschicht eingebettet ist.

Vorzugsweise wird die Schutzschicht aus demselben UV-härtenden Klarlack gebildet. Mehr bevorzugt wird als Schutzschicht eine transparente Kunststofffolie verwendet, die als abschließende Schicht auf den Schildrohling auflaminiert wird.

Zur Bestimmung der originären Herkunft des erfindungsgemäßen Schilds zur Kennzeichnung von Fahrzeugen, insbesondere eines Kfz-Kennzeichenschilds kann, beispielsweise bei einer Verkehrskontrolle, ein linearer oder zirkularer Polarisationsfilter an das Kennzeichenschild gehalten werden, um beispielsweise das Sicherheitselement zu detektieren. In einer alternativen Ausführungsvariante kann die Prüfung der Echtheit eines Kennzeichenschilds voll automatisiert mittels elektronischer Überwachungssysteme, die in eine Straßen-und/oder Autobahninfrastruktur integriert sind, erfolgen.

Das erfindungsgemäße Verfahren lässt sich aufgrund seines sehr einfachen Verfahrensablaufs, der nur wenige Verfahrensschritte umfasst, auf einfache Weise in bestehende Verfahrensabläufe zur Herstellung von Schildrohlingen, insbesondere für Kfz-Kennzeichenschilder integrieren, ohne Änderungen dieser Verfahrensabläufe erforderlich zu machen.

Die mittels des erfindungsgemäßen Verfahrens hergestellten Schildrohlinge können in nachgelagerten Verfahrensschritten mit einer individuellen Legende versehen werden, die z.B. bei Verwendung prägefähigen Materialien für die Schildplatine und die retroreflektierende Folie mechanisch mittels geeigneter Prägewerkzeuge unter Verwendung einer Prägepresse in den Schildrohling geprägt werden kann, z.B. als erhabene Prägung.

Eine geprägte Legende wird bevorzugt zusätzlich eingefärbt, was insbesondere mittels eines Farbübertrags auf die erhaben geprägten Bereiche der Legende z.B. in einem Thermotransferverfahren von einer Heißprägefolie oder mittels Abwalzen mit einer Farbwalze möglich ist.

Alternativ kann die Legende auch auf die vorderseitige Oberfläche des Schildrohlings aufgedruckt sein.

Eine Legende kann aber auch durch Anbringung von separat ausgebildeten individuellen Zeichen auf der vorderseitigen Oberfläche des Schildrohlings ausgebildet sein.

Weiterhin betrifft die vorliegende Erfindung die Verwendung eines optisch detektierbaren Sicherheitselements bestehend aus in einer organischen Matrix dispergierten Flüssigkristallen zur Herstellung eines retroreflektierenden Schilds zur Kennzeichnung von Fahrzeugen, insbesondere von Kraftfahrzeugen.

Weitere Vorteile und Merkmale der erfindungsgemäßen Produkte sowie Verfahren ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Dies gilt auch für die einzelnen Merkmale der nachfolgend diskutierten Ausführungsbeispiele, soweit diese nicht für den Fachmann als zwingend zueinander gehörig erkennbar sind.

Die nachstehend wiedergegebenen Ausführungsbeispiele sind dazu vorgesehen, dem Fachmann die Erfindung näher zu erläutern. Die Ausführungsbeispiele werden anhand der beigefügten Zeichnung erläutert. In dieser zeigen:
- Fig. 1:: ein retroreflektierendes Kfz-Kennzeichenschilds in Aufsicht gemäß einem ersten Ausführungsbeispiel,
- Fig. 2:: das retroreflektierende Kfz-Kennzeichenschild aus Fig. 1 in seitlicher Schnittdarstellung,
- Fig. 3:: eine Aufnahme eines Schildrohlings aufweisend ein Sicherheitselement, bei dem die Flüssigkristalle in der nematischen Phase angeordnet sind,
- Fig.4: eine weitere Aufnahme eines Schildrohlings aufweisend ein Sicherheitselement, bei dem die Flüssigkristalle in der nematischen Phase angeordnet sind.

In den nachfolgenden Figuren sind identische Merkmale mit denselben Bezugszeichen bezeichnet.

Die nachstehend diskutierten Ausführungsbeispiele beziehen sich sämtlich auf Kfz-Kennzeichenschilder und deren Herstellung. Es ist für den Fachmann aber offensichtlich, dass auch Schilder anderer Art wie z.B. Verkehrsschilder, Hausnummernschilder, etc. in weitgehend übereinstimmender Art und Weise aufgebaut sein können.

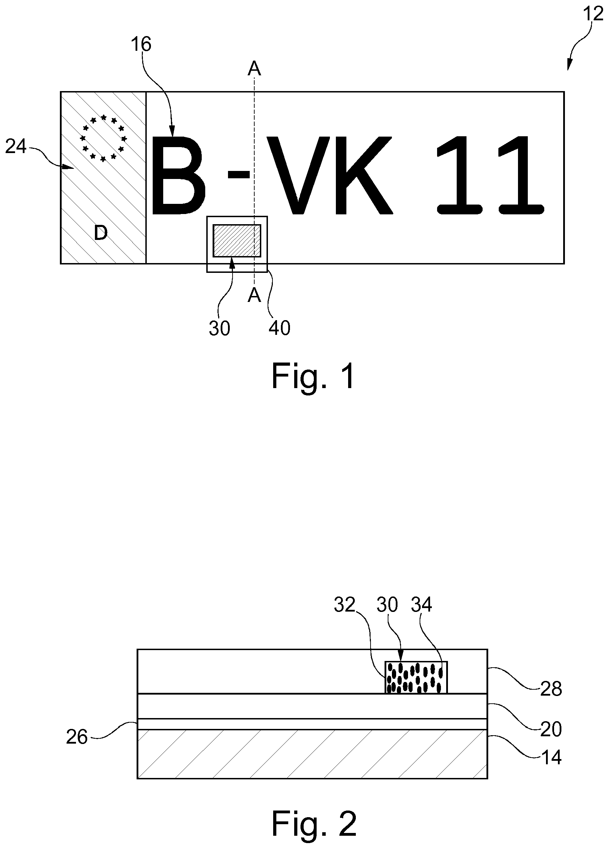

Fig. 1 zeigt ein retroreflektierendes Kfz-Kennzeichenschild 12 in Aufsicht gemäß einem ersten Ausführungsbeispiel. Das Kennzeichenschild 12 basiert auf einer metallischen Schildplatine 14, auf die vorderflächig eine retroreflektierende Folie 20, vorzugsweise einer mikrokugel-basierten retroreflektierenden Folie, auflaminiert ist. Diese weist einen farbigen Bereich 24 auf, in dem z.B. Hoheitszeichen des Zulassungsstaats angeordnet sein können. Im gezeigten Ausführungsbeispiel handelt es sich bei dem farbigen Bereich 24 um ein an der linken Seite des Kennzeichenschilds 12 angeordnetes blaues Band, in dem einerseits das Länderkürzel "D" für Deutschland und andererseits das Hoheitssymbol der Europäischen Union angeordnet sind.

Das Kennzeichenschild 12 weist weiterhin eine erhaben geprägte individuelle Kennzeichenlegende 16 auf, deren erhabene Bereiche mittels Farbübertrag von einer Thermotransferfolie schwarz eingefärbt sind.

Weiterhin umfasst das Kennzeichenschild 12 ein optisch detektierbares Sicherheitselement 30, welches lediglich mittels eines optischen Hilfsmittels, beispielsweise eines Polarisationsfilters 40, der an dem Sicherheitselement 30 platziert wird, identifizierbar ist.

Figur 2 zeigt eine Schnittdarstellung durch das Kfz-Kennzeichenschild 12 gemäß Fig. 1 entlang der Schnittlinie A-A. Die retroreflektierende Folie 20 ist durch eine Klebstoffschicht 26 mit der metallischen, mechanisch prägbaren Schildplatine 14 verbunden. Auf der außenliegenden Oberfläche der retroreflektierenden Folie 20 ist das Sicherheitselement 30 angeordnet, das von einer Schutzschicht 28 umhüllt ist. Die Schutzschicht 28 wird vorzugsweise durch eine transparente Kunststofffolie gebildet.

Das Sicherheitselement 30 besteht aus in einer organischen Matrix 32 dispergierten Flüssigkristallen 34, die in einer nematischen oder cholesterischen Phase angeordnet sein können.

Im Weiteren wird eine in den Figuren nicht dargestellte beispielhafte Herstelleinrichtung zur Ausführung des erfindungsgemäßen Herstellungsverfahrens für einen Schildrohling erläutert.

Die beispielhafte Herstellvorrichtung ist zur Herstellung eines Schildrohlings nach dem erfindungsgemäßen Herstellungsverfahren vorgesehen und eingerichtet. Sie umfasst eine Platinenzuführungseinheit zur Bereitstellung einer Schildplatine.

Die Schildplatine wird beispielsweise von einem endlosen Aluminiumband, welches von einer Vorratsrolle abgespult wird, dem Prozess zugeführt.

Weiterhin umfasst die Herstellvorrichtung eine Folienzuführungseinheit zur Bereitstellung einer retroreflektierenden Folie. Die Folienzuführungseinheit umfasst eine Vorratsspule, auf der ein Vorrat der retroreflektierenden Folie als Endlosband aufgespult ist. Von dieser Vorratsspule wird die auf die Schildplatine aufzulaminierende retroreflektierende Folie abgespult und einer Laminierstation zugeführt, in der die retroreflektierende Folie auf das der Laminierstation ebenfalls zugeführte endlose Metallband auflaminiert wird. Hierzu wird ein die Klebstoffschicht abdeckender Papierliner von der retroreflektierenden Folie abgezogen und auf einer Aufnahmerolle aufgespult.

In der Laminierstation wird weiterhin die Klebstoffschicht der retroreflektierenden Folie mit dem Metallband in Kontakt gebracht. Eine in der Laminierstation angeordnete (ggf. beheizte) Andruckrolle beaufschlagt die retroreflektierende Folie mit einem definierten Anpressdruck und sorgt so für eine Aktivierung der Kleberschicht.

Stromabwärts der Laminierstation ist eine Stanzeinheit angeordnet, welche aus dem metallischen Band, welches mit der retroreflektierenden Folie laminiert ist, einzelne Schildplatinen ausstanzt, die dann einer weiteren Verarbeitung zugeführt werden.

Stromabwärts der Stanzeinheit ist eine Siebdruckeinheit angeordnet, in der die einzelnen Schildplatinen mit einem Sicherheitselement versehen werden. Hierzu wird eine Flüssigkristalldispersion, die vorzugsweise aus in einem UV-härtenden Klarlack dispergierten reaktiven Mesogenen gebildet wird, mittels Siebdruck aufgetragen, so dass ein gedrucktes Objekt, beispielsweise in Form eines Symbols, erhalten wird.

Die so bedruckte bzw. mit dem Sicherheitselement versehene Schildplatine wird anschließend einer UV-Bestrahlungseinheit zugeführt, in der die reaktiven Mesogene miteinander polymerisiert und der Klarlack ausgehärtet wird. Hierdurch wird ein Sicherheitselement erhalten, das ein anistrop optisches Verhalten aufweist.

Die erhaltenen Schildrohlinge können weiterhin mit einer Schutzschicht versehen werden.

Ein zirkularer Polarisationsfilter reduziert den Lichtanteil, der von einer reflek-tierenden Oberfläche, beispielsweise einer retroreflektierenden Folie, reflektiert wird.

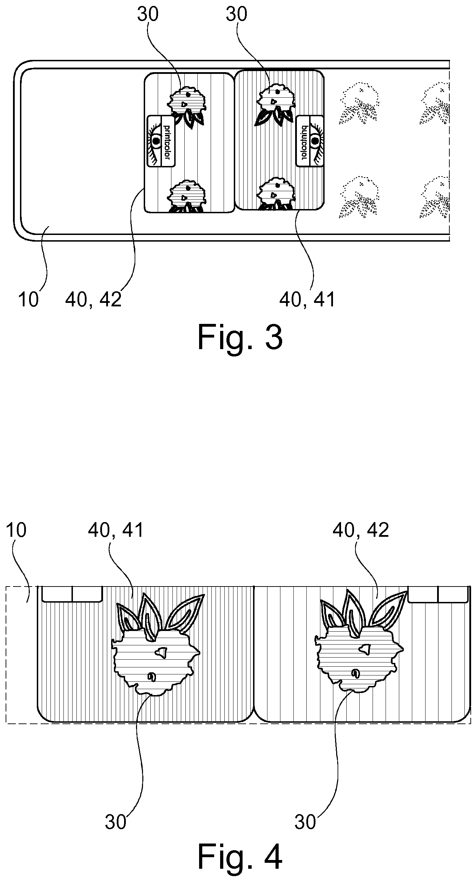

In den Figuren 3 und 4 sind jeweils Aufnahmen eines retroreflektierenden Schildrohlings 10 dargestellt, das mit einem Sicherheitselement 30 bedruckt wurde. Zur Darstellung der unterschiedlichen Effekte bei der Verwendung eines zirkularen Polarisationsfilters 41 und eines linearen Polarisationsfilters 42 wurden diese an dem Sicherheitselement 30 angeordnet. Wie an den Darstellungen in den Figuren 3 und 4 zu erkennen ist, erscheint ein Sicherheitselement 30 demnach bei Anlegen eines zirkularen Polarisationsfilters 41 heller als der Hintergrund, wohingegen ein linearer Polarisationsfilter 42 das Sicherheitselement 30 farblich hervorhebt.

### Bezugszeichen

- 10: Schildrohling
- 12: Kennzeichenschild
- 14: Schildplatine
- 16: Legende
- 20: retroreflektierende Folie
- 24: farbiger Bereich
- 26: Klebstoffschicht
- 28: Schutzschicht
- 30: Sicherheitselement
- 32: organische Matrix
- 34: Flüssigkristalle
- 40: Polarisationsfilter
- 41: zirkularer Polarisationsfilter
- 42: linearer Polarisationsfilter

## Patentansprüche

1. Schildrohling (10) für ein retroreflektierendes Schild (12) aufweisend:
- eine Schildplatine (14),
- eine retroreflektierende Folie (20), sowie
- mindestens ein optisch detektierbares Sicherheitselement (30), das auf der retroreflektierenden Folie (20) angeordnet ist, wobei
- das Sicherheitselement (30) in einer organischen Matrix (32) dispergierte Flüssigkristalle (34) umfasst.

2. Schildrohling (10) nach Anspruch 1, wobei die organische Matrix (32) aus einem UV-härtenden Klarlack besteht.

3. Schildrohling (10) nach Anspruch 1 oder 2, wobei das Sicherheitselement (30) mindestens ein gedrucktes Objekt umfasst.

4. Schildrohling (10) nach Anspruch 3, wobei das Objekt aus einem Muster, einem Bild, einem Symbol, einem Wappen, einem Hoheitszeichen, einem oder mehrerer Buchstaben, einer oder mehrerer Zahlen, einer geometrischen Struktur, einem Code wie Barcode oder QR-code, oder einer Kombination hiervon besteht.

5. Schildrohling (10) nach einem der vorhergehenden Ansprüche 1 bis 4, wobei die Flüssigkristalle (34) in der nematischen Phase vorliegen.

6. Schildrohling (10) nach einem der vorhergehenden Ansprüche 1 bis 4, wobei die Flüssigkristalle (34) in der cholesterischen Phase vorliegen.

7. Schildrohling (10) nach einem der vorhergehenden Ansprüche, wobei die retroreflektierende Folie (20) eine mikroglaskugelbasierte oder eine mikroprismatische retroreflektierende Folie ist.

8. Schildrohling (10) nach einem der vorhergehenden Ansprüche, weiterhin umfassend eine auf der retroreflektierenden Folie (20) angeordnete transparente Schutzschicht (28).

9. Schildrohling (10) nach einem der vorhergehenden Ansprüche, wobei die Schildplatine (14) aus einem Material besteht ausgewählt aus der Gruppe umfassend Holz, Kunststoff oder Metall, insbesondere Aluminium.

10. Retroreflektierendes Schild (12) zur Kennzeichnung von Kraft-, Schienen- und/oder Wasserfahrzeugen, umfassend einen Schildrohling (10) gemäß einem oder mehreren der vorhergehenden Ansprüche sowie einer am Schildrohling (10) angeordneten individuellen Legende (16).

11. Verfahren zur Herstellung eines Schildrohlings (10) für ein retroreflektierendes Schild (12), aufweisend die folgenden Schritte:
a) Bereitstellen einer Schildplatine (14) und einer retroreflektierenden Folie (20),
b1) Auflaminieren der retroreflektierenden Folie (20) auf die Schildplatine (14), und
c1) Anordnen mindestens eines optisch detektierbaren Sicherheitselements (30) an der retroreflektierenden Folie (20), wobei das Sicherheitselement (30) in einer organischen Matrix (32) dispergierte Flüssigkristalle (34) umfasst, oder
b2) Anordnen mindestens eines optisch detektierbaren Sicherheitselements (30) an der retroreflektierenden Folie (20), wobei das Sicherheitselement (30) in einer organischen Matrix (32) dispergierte Flüssigkristalle (34) umfasst, und
c2) Auflaminieren der mit dem optisch detektierbaren Sicherheitselement (30) versehenen retroreflektierenden Folie (20) auf die Schildplatine (14).

12. Verfahren nach Anspruch 11, wobei das Sicherheitselement (30) mittels eines Druckverfahrens, vorzugsweise mittels Siebdruck oder Flexodruck auf der retroreflektierenden Folie (20) aufgebracht wird.

13. Verfahren nach Anspruch 11 oder 12, weiterhin umfassend den Schritt: d)
Bereitstellen und Anordnen einer Schutzschicht 28) auf die retroreflektierende Folie (20).

14. System umfassend einen Schildrohling (10) nach einem der Ansprüche 1 bis 9, oder ein retroreflektierendes Schild (12) nach Anspruch 10 und eine Prüfvorrichtung enthaltend einen linearen und/oder einen zirkularen Polarisationsfilter (41, 42).

15. Verwendung eines optisch detektierbaren Sicherheitselements (30) bestehend aus in einer organischen Matrix (32) dispergierten Flüssigkristallen (34) zur Herstellung eines retroreflektierenden Schilds (12) zur Kennzeichnung von Kraft-, Schienen- und/oder Wasserfahrzeugen.
